# EUROPEAN PATENT APPLICATION

(11) **EP 4 838 947 A1**
(43) Date of publication of application: **11.11.2026**
(21) Application number: 25752537.8
(22) Date of filing: 06.02.2025
(51) Int. Cl.: H04W 28/04, H04W 28/06, H04L 1/1607, H04L 47/34, H04W 24/10, H04W 28/02

(54) **METHOD AND DEVICE FOR LOW LATENCY RLC POLLING FOR LOW LATENCY DATA IN WIRELESS COMMUNICATION SYSTEM**

(30) Priority: 06.02.2024 KR 20240018133; 09.05.2024 KR 20240061160
(71) Applicant: Samsung Electronics Co., Ltd., Suwon-si, Gyeonggi-do 16677 (KR)
(72) Inventor: SUN, Weiping, Suwon-si, Gyeonggi-do 16677 (KR); KANG, Hyunjeong, Suwon-si, Gyeonggi-do 16677 (KR); LEE, Taeseop, Suwon-si, Gyeonggi-do 16677 (KR); BAEK, Sangkyu, Suwon-si, Gyeonggi-do 16677 (KR)
(74) Representative: Gulde & Partner
(86) International application number: PCT/KR2025/099302
(87) International publication number: WO 2025/170443

(57) **Abstract**

The present disclosure relates to a 5G or 6G communication system for supporting higher data transmission rates. The present disclosure proposes a method and device for a terminal and base station to perform low-latency RLC polling for low-latency data in a wireless communication system.

## Description

### [Technical Field]

The disclosure relates to the operation of a terminal and a base station in a wireless communication system. More specifically, the disclosure relates to a method and device for performing low-latency radio link control (RLC) polling for low-latency data in a wireless communication system.

### [Background Art]

5G mobile communication technology defines a wide frequency band to enable a fast transmission speed and new services, and may be implemented not only in a frequency ('sub 6 GHz') band of 6 GHz or less such as 3.5 GHz, but also in an ultra high frequency band ('above 6 GHz') called a mmWave such as 28 GHz and 39 GHz. Further, in the case of 6 generation (6G) mobile communication technology, which is referred to as a beyond 5G system, in order to achieve a transmission speed that is 50 times faster than that of 5G mobile communication technology and ultra-low latency reduced to 1/10 compared to that of 5G mobile communication technology, implementations in terahertz bands (e.g., 95 GHz to 3 terahertz (3 THz) band) are being considered.

In the early days of 5G mobile communication technology, with the goal of satisfying the service support and performance requirements for an enhanced mobile broadband (eMBB), ultra-reliable low-latency communications (URLLC), and massive machine-type communications (mMTC), standardization has been carried out for beamforming and massive multi-input multi-output (MIMO) for mitigating a path loss of radio waves in an ultra-high frequency band and increasing a propagation distance of radio waves, support for various numerologies (multiple subcarrier spacing operation, and the like) for efficient use of ultra-high frequency resources and dynamic operation for slot formats, initial access technology for supporting multi-beam transmission and broadband, a definition and operation of a band-width part (BWP), a new channel coding method such as low density parity check (LDPC) code for large capacity data transmission and polar code for high reliable transmission of control information, L2 pre-processing, and network slicing that provides a dedicated network specialized for specific services.

Currently, discussions are ongoing to improve initial 5G mobile communication technology and enhance a performance thereof in consideration of services in which 5G mobile communication technology was intended to support, and physical layer standardization for technologies such as vehicle-to-everything (V2X) for helping driving determination of an autonomous vehicle and increasing user convenience based on a location and status information of the vehicle transmitted by the vehicle, new radio unlicensed (NR-U) for the purpose of a system operation that meets various regulatory requirements in unlicensed bands, NR UE power saving, a non-terrestrial network (NTN), which is direct UE-satellite communication for securing coverage in regions where communication with a terrestrial network is impossible, and positioning is in progress.

Further, standardization in the field of air interface architecture/protocol for technologies such as industrial Internet of things (IIoT) for supporting new services through linkage and convergence with other industries, integrated access and backhaul (IAB) that provides nodes for expanding network service regions by integrating wireless backhaul links and access links, mobility enhancement including conditional handover and dual active protocol stack (DAPS) handover, and 2-step RACH for NR that simplifies a random access procedure is also in progress, and standardization in the system architecture/service field for 5G baseline architecture (e.g., service based architecture, service based interface) for applying network functions virtualization (NFV) and software-defined networking (SDN) technologies, mobile edge computing (MEC) that receives services based on a location of a UE, and the like is also in progress.

When such a 5G mobile communication system is commercialized, connected devices in an explosive increase trend will be connected to communication networks; thus, it is expected that function and performance enhancement of a 5G mobile communication system and integrated operation of connected devices will be required. To this end, new research on eXtended reality (XR) for efficiently supporting augmented reality (AR), virtual reality (VR), mixed reality (MR), and the like, 5G performance improvement and complexity reduction using artificial intelligence (AI) and machine learning (ML), AI service support, metaverse service support, and drone communication will be conducted.

Further, the development of such a 5G mobile communication system will be the basis for the development of full duplex technology for improving frequency efficiency and system network of 6G mobile communication technology, satellite, artificial intelligence (AI)-based communication technology that utilizes AI from a design stage and that realizes system optimization by internalizing end-to-end AI support functions, and next generation distributed computing technology that realizes complex services beyond the limits of UE computing capabilities by utilizing ultra-high performance communication and computing resources as well as a new waveform for ensuring coverage in a terahertz band of 6G mobile communication technology, full dimensional MIMO (FD-MIMO), multi-antenna transmission technologies such as an array antenna and large scale antenna, metamaterial-based lenses and antennas for improving coverage of terahertz band signals, high-dimensional spatial multiplexing technology using orbital angular momentum (OAM), and reconfigurable intelligent surface (RIS) technology.

### [Disclosure of Invention]

### [Technical Problem]

An embodiment disclosed in the disclosure provides a method and device capable of effectively providing a service in a mobile communication system.

The disclosure aims to perform RLC polling.

Technical problems to be achieved in the disclosure are not limited to the above-described technical problems, and other technical problems that are not described will be clearly understood by those of ordinary skill in the art to which the disclosure belongs from the description below.

### [Solution to Problem]

Based on the discussion described above, the disclosure provides a method for processing a control signal in a mobile communication system, which may include receiving a first control signal transmitted from a base station; processing the received first control signal; and transmitting a second control signal generated based on the processing to the base station.

### [Advantageous Effects of Invention]

The disclosed embodiments provide a device and method for effectively providing services in a mobile communication system. Specifically, the disclosure provides a method and device for performing RLC polling.

Effects that can be obtained from the disclosure are not limited to the above-described effects, and other effects that are not described will be clearly understood by those of ordinary skill in the art to which the disclosure belongs from the description below.

### [Brief Description of Drawings]

FIG. 1 is a diagram illustrating a structure of an NR system according to an embodiment of the disclosure.
FIG. 2 is a diagram illustrating a wireless protocol structure in an NR system according to an embodiment of the disclosure.
FIG. 3 is a signal flow diagram illustrating a procedure in which a base station establishes a configuration for an RLC entity of a terminal using a radio resource control (RRC) message when the terminal establishes a connection with a network according to an embodiment of the disclosure.
FIG. 4 is a signal flow diagram illustrating a procedure for performing RLC polling of an RLC entity of a terminal according to an embodiment of the disclosure.
FIG. 5 is a block diagram illustrating an RLC polling procedure in an AM RLC entity according to an embodiment of the disclosure.
FIG. 6A is a diagram illustrating an AM RLC PDU format according to an embodiment of the disclosure.
FIG. 6B is a diagram illustrating an AM RLC PDU format according to an embodiment of the disclosure.
FIG. 6C is a diagram illustrating an AM RLC PDU format according to an embodiment of the disclosure.
FIG. 6D is a diagram illustrating an AM RLC PDU format according to an embodiment of the disclosure.
FIG. 7 is a block diagram illustrating an internal structure of a terminal according to an embodiment of the disclosure.
FIG. 8 is a block diagram illustrating a constitution of a base station according to an embodiment of the disclosure.

### [Mode for the Invention]

Hereinafter, an operating principle of the disclosure will be described in detail with reference to the accompanying drawings. In the following description, in describing the disclosure, in the case that it is determined that a detailed description of a related well-known function or constitution may unnecessarily obscure the gist of the disclosure, a detailed description thereof will be omitted. Terms described below are terms defined in consideration of functions in the disclosure, which may vary according to intentions or customs of users and operators. Therefore, the definition should be made based on the content throughout this specification.

In the following description, in describing the disclosure, in the case that it is determined that a detailed description of a related well-known function or constitution may unnecessarily obscure the gist of the disclosure, a detailed description thereof will be omitted. Hereinafter, embodiments of the disclosure will be described with reference to the accompanying drawings.

Hereinafter, the principles of operation of the disclosure will be described in detail with reference to the accompanying drawings. The terms used hereinafter are defined in consideration of their functions in the disclosure. Because these terms may vary according to the intention or practice of a user or operator, the definitions thereof should be determined based on the overall contents of this specification.

In describing embodiments of the disclosure, descriptions of technical contents that are well known in the technical field to which the disclosure pertains and that are not directly related to the disclosure will be omitted. This is to more clearly convey the gist of the disclosure without obscuring the gist of the disclosure by omitting unnecessary description.

For the same reason, some components are exaggerated, omitted, or schematically illustrated in the accompanying drawings. Further, the size of each component does not fully reflect the actual size. In each drawing, the same reference numerals are given to the same or corresponding components.

Advantages and features of the disclosure, and a method of achieving them will become apparent with reference to the embodiments described below in detail in conjunction with the accompanying drawings. However, the disclosure is not limited to the embodiments disclosed below, but may be implemented in various different forms, and only embodiments of the disclosure enable the disclosure to be complete, and are provided to fully inform the scope of the disclosure to those of ordinary skill in the art to which the disclosure belongs, and the disclosure is only defined by the scope of the claims. Like reference numerals refer to like components throughout the specification.

In this case, it will be understood that each block of flow diagrams and combinations of the flow diagrams may be performed by computer program instructions. Because these computer program instructions may be mounted in a processor of a general purpose computer, a special purpose computer, or other programmable data processing equipment, instructions performed by a processor of a computer or other programmable data processing equipment generate a means that performs functions described in the flow diagram block(s). Because these computer program instructions may be stored in a computer usable or computer readable memory that may direct a computer or other programmable data processing equipment in order to implement a function in a particular manner, the instructions stored in the computer usable or computer readable memory may produce a production article containing instruction means for performing the function described in the flow diagram block(s). Because the computer program instructions may be mounted on a computer or other programmable data processing equipment, a series of operation steps are performed on the computer or other programmable data processing equipment to generate a computer-executable process; thus, instructions for performing the computer or other programmable data processing equipment may provide steps for performing functions described in the flow diagram block(s).

Further, each block may represent a portion of a module, a segment, or a code including one or more executable instructions for executing a specified logical function(s). Further, it should be noted that in some alternative implementations, functions recited in the blocks may occur out of order. For example, two blocks illustrated one after another may in fact be performed substantially simultaneously, or the blocks may be sometimes performed in the reverse order according to the corresponding function.

In this case, a term '-unit' used in this embodiment means software or hardware components such as a field programmable gate array (FPGA) or an application specific integrated circuit (ASIC), and '-unit' performs certain roles. However, '-unit' is not limited to software or hardware. '-unit' may be constituted to reside in an addressable storage medium or may be constituted to reproduce one or more processors. Therefore, as an example, '-unit' includes components such as software components, object-oriented software components, class components, and task components, processes, functions, properties, procedures, subroutines, segments of program code, drivers, firmware, microcode, circuit, data, databases, data structures, tables, arrays, and variables. Functions provided in the components and '-units' may be combined into a smaller number of components and '-units' or may be further separated into additional components and '-units'. Further, components and '-units' may be implemented to reproduce one or more CPUs in a device or secure multimedia card.

Hereinafter, a base station is a subject performing resource allocation of a terminal, and may be at least one of a node B, a base station (BS), an eNode B (eNB), a gNode B (gNB), a radio access unit, a base station controller, or a node on a network. The terminal may include a user equipment (UE), a mobile station (MS), a cellular phone, a smart phone, a computer, or a multimedia system capable of performing a communication function. Further, the embodiments of the disclosure may be applied to other communication systems having a similar technical background or channel type to the embodiments of the disclosure described below. Further, the embodiments of the disclosure may be applied to other communication systems through some modifications within a range that does not significantly deviate from the scope of the disclosure by determination of a person having skilled technical knowledge. For example, 5G mobile communication technology (5G, new radio (NR)) developed after LTE-A may be included therein, and the following 5G may be a concept including existing LTE, LTE-A and other similar services. Further, the disclosure may be applied to other communication systems through some modifications within a range that does not significantly deviate from the scope of the disclosure by determination of a person having skilled technical knowledge.

Hereinafter, a term for identifying an access node, a term referring to a network entity or a network function (NF), a term referring to messages, a term referring to an interface between network entities, and terms referring to various identification information used in the description are exemplified for convenience of description. Accordingly, the disclosure is not limited to the terms described below, and other terms referring to an object having an equivalent technical meaning may be used.

Hereinafter, for convenience of description, some terms and names defined in the 3rd generation partnership project long term evolution (3GPP) standard and/or 3GPP new radio (NR) standard may be used. However, the disclosure is not limited by the above terms and names, and may be equally applied to systems conforming to other standards.

Certain terms used in the following description are provided to aid in understanding the disclosure, and such terms may be modified in various forms without departing from the spirit and scope of the disclosure.

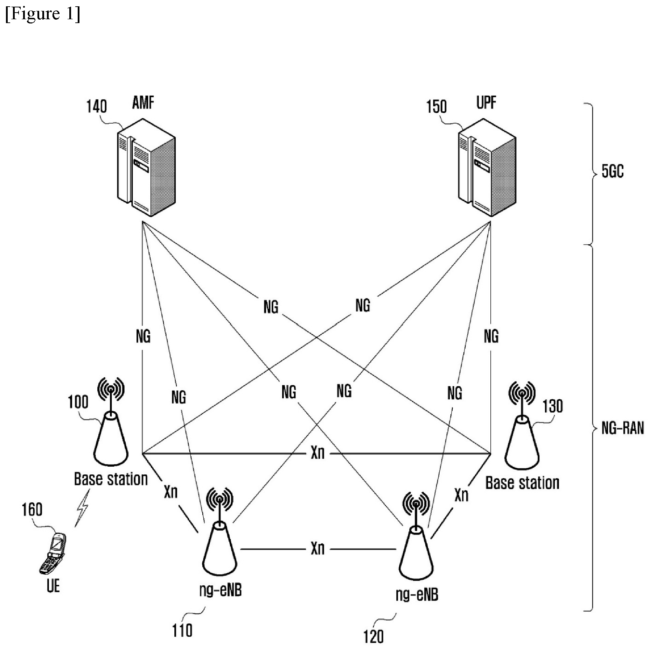

FIG. 1 is a diagram illustrating a structure of an NR system according to an embodiment of the disclosure.

With reference to FIG. 1, a wireless communication system may include at least one of multiple base stations (e.g., gNB 100, ng-eNB 110, ng-eNB 120, or gNB 130), an access and mobility management function (AMF) 140, and a user plane function (UPF) 150. The wireless communication system is not limited to components illustrated in FIG. 1, and may include more or fewer components.

According to an embodiment of the disclosure, a user equipment (hereinafter, referred to as a UE or terminal) 160 may access an external network through at least one of the base stations 100, 110, 120, and 130 or the UPF 150.

In FIG. 1, the base station 100, 110, 120, or 130 may serve as access nodes of a cellular network and provide wireless access to UEs accessing the network. For example, the base stations 100, 110, 120, and 130 may collect at least one piece of state information, such as a buffer state, an available transmission power state, or a channel state of UEs, and perform scheduling in order to service user traffic. The base stations may support connections between the UEs and a core network (CN). The CN of new radio (NR) may refer to a 5th generation core network (5GC).

The gNBs 100 and 130 may control a plurality of cells. The gNB may apply an adaptive modulation and coding (hereinafter, AMC) scheme that determines a modulation scheme and a channel coding rate according to channel conditions of the UE.

The core network may be a device responsible for various control functions including a mobility management function for UEs. The core network may be connected to a plurality of base stations. Furthermore, the 5GC may be integrated with existing LTE systems.

In a wireless communication system, a user plane (hereinafter, UP) related to transmission of actual user data and a control plane (hereinafter, CP) such as connection management may be configured separately. The gNB 100 and the gNB 130 may use UP and CP technologies defined in NR technology. The ng-eNB 110 and the ng-eNB 120 may use UP and CP technologies defined in long term evolution (LTE) technology.

The AMF 140 may perform a mobility management function for a UE. The AMF is a device responsible for a control function and may be connected to a plurality of base stations.

The UPF 150 may refer to a gateway device that provides data transmission. The NR wireless communication system may include a session management function (SMF). The SMF may manage packet data network connections such as protocol data unit (PDU) sessions provided to UEs.

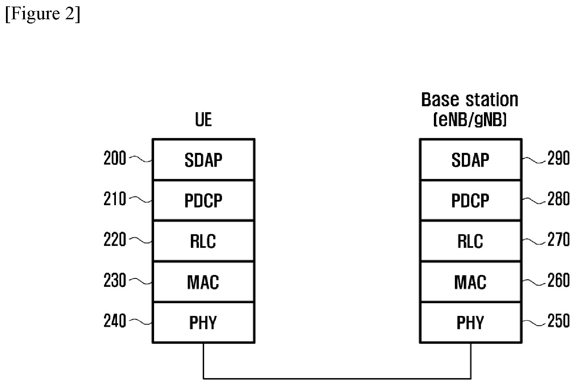

FIG. 2 is a diagram illustrating a wireless protocol structure in an NR system according to an embodiment of the disclosure.

With reference to FIG. 2, a wireless protocol of the NR system may include at least one of a service data adaptation protocol (SDAP) 200, a packet data convergence protocol (PDCP) 210, a radio link control (RLC) 220, a medium access control (MAC) 230, or a physical (PHY) 240 in the UE.

The wireless protocol of the NR system may include at least one of a service data adaptation protocol (SDAP) 290, a packet data convergence protocol (PDCP) 280, a radio link control (RLC) 270, a medium access control (MAC) 260, or a physical (PHY) 250 in the base station.

The SDAP 200 or 290 may deliver user data. The SDAP may perform at least one of operations for mapping quality of service (QoS) flows to specific data radio bearers (DRBs) for uplink and downlink, marking QoS flow identifiers (IDs) for uplink and downlink, or mapping reflective QoS flows to data bearers for uplink SDAP PDUs. SDAP configurations corresponding to each DRB may be provided from a higher RRC layer. However, this is only an embodiment, and the operation or function of the SDAP is not limited to the above example.

The PDCP 210 or 280 may perform compression and/or decompression of Internet Protocol (IP) headers. Further, the PDCP 210 or 280 may provide at least one of an in-order delivery function and/or an out-of-order delivery function, reordering, duplicate detection, a retransmission function, an encryption or decryption function. However, this is only an embodiment, and the operations or functions of the PDCP are not limited to the above example.

The radio link control (hereinafter, RLC) 220 or 270 may reconfigure PDCP protocol data units (PDUs) to an appropriate size. The RLC 220 or 270 may provide at least one of an in-order delivery function and/or an out-of-order delivery function, an ARQ function, concatenation, segmentation, reassembly, re-segmentation, reordering, duplicate detection, or error detection. However, this is only an embodiment, and the operations or functions of the RLC are not limited to the above example.

The MAC 230 or 260 may be connected to a plurality of RLC entities configured for a single UE. The MAC may perform at least one of an operation of multiplexing RLC PDUs into MAC PDUs, or an operation of demultiplexing RLC PDUs from MAC PDUs. The MAC may provide at least one of a mapping function, a scheduling information reporting function, a HARQ function, a priority control function between logical channels, a priority control function between UEs, an MBMS service identification function, a transport format selection function, or a padding function. However, this is only an embodiment, and the operations or functions of the MAC are not limited to the above example.

The physical (hereinafter, PHY) layer 240 or 250 may generate OFDM symbols by channel coding and modulating upper layer data, and transmit the OFDM symbols through a wireless channel. The PHY layer may demodulate OFDM symbols received through a wireless channel, perform channel decoding, and transmit them to a higher layer. The PHY layer may use hybrid automatic repeat and request (HARQ) for additional error correction. The receiver may transmit 1 bit to indicate whether a packet transmitted by the transmitter has been received. 1-bit information may be HARQ acknowledgement (ACK) or negative acknowledgement (NACK) information.

Downlink HARQ ACK or NACK information for uplink data transmission may be transmitted via a physical hybrid-ARQ indicator channel (PHICH) in the case of LTE. In the case of NR, whether retransmission is required or whether new transmission is to be performed may be determined through scheduling information of the UE on a physical downlink control channel (PDCCH), which is a channel through which downlink or uplink resource allocation, etc. is transmitted. This is because NR may apply asynchronous HARQ.

Uplink HARQ ACK or NACK information for downlink data transmission may be transmitted via a physical uplink control channel (PUCCH) or a physical uplink shared channel (PUSCH). The PUCCH may be transmitted in the uplink of a PCell. If the UE supports the PUCCH, the PUCCH may also be transmitted in a SCell. For example, if the UE supports the PUCCH, the PUCCH may be transmitted from the UE to the base station in the uplink of the SCell. Here, the SCell may refer to a PUCCH SCell.

Above the PDCP layer of the UE and the base station, there may be a radio resource control (RRC) layer. The RRC layer may transmit and receive connection-related and/or measurement-related configuration control messages for radio resource control.

The physical layer may be composed of at least one frequency or at least one carrier. A technology that simultaneously configures and uses a plurality of frequencies may be referred to as carrier aggregation (hereinafter, CA). A single carrier may be used for communication between a terminal (or UE) and a base station (eNB or gNB). When CA technology is used, a primary carrier and at least one secondary carrier may be used for communication between the terminal and the base station. In this case, data throughput may increase as the number of secondary carriers increases. A cell within a base station that uses a primary carrier in LTE or NR may be referred to as a primary cell (PCell). A cell within a base station that uses a subcarrier in LTE or NR may be referred to as a secondary cell (SCell).

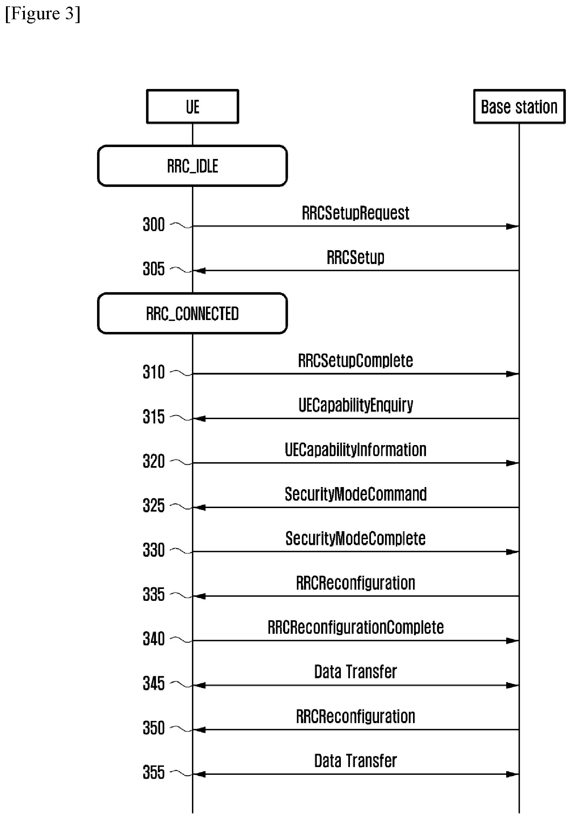

FIG. 3 is a signal flow diagram illustrating a procedure in which a base station establishes a configuration for an RLC entity of a UE using a radio resource control (RRC) message when the UE establishes a connection with a network according to an embodiment of the disclosure.

With reference to FIG. 3, in the disclosure, the UE may establish a connection with a network by switching from an RRC idle mode (RRC_IDLE) to an RRC connected mode (RRC_CONNECTED). The UE may establish uplink or downlink transmission synchronization with the base station through a random access process. The UE may transmit an RRCSetupRequest message to the base station in step 300. The RRCSetupRequest message may include an identifier of the UE or a reason for establishing a connection (e.g., EstablishmentCause). The base station may transmit an RRCSetup message to the UE in step 305 so that the UE may establish an RRC connection.

For example, the RRCSetup message may include configuration information (e.g., RadioBearerConfig) for each radio bearer (e.g., at least one of a data radio bearer (DRB) or a signaling radio bearer (SRB)). The radio bearer configuration information may include an identifier (ID) of each radio bearer, configuration information for a PDCP entity of the radio bearer (e.g., PDCP-Config), an indicator indicating whether the radio bearer is a dual active protocol stack (DAPS) bearer, and the like.

For example, the RRCSetup message may include, for each cell group (e.g., at least one of a master cell group (MCG) or a secondary cell group (SCG)), RLC bearer configuration information (e.g., RLC-BearerConfig) belonging to the cell group. The RLC bearer configuration information may include at least one of the following information.
- logicalChannelIdentity: It may indicate an LCID corresponding to an RLC bearer and/or an RLC entity.
- servedRadioBearer: It may indicate a radio bearer ID associated with an RLC bearer and/or an RLC entity. The radio bearer ID may indicate at least one of a specific DRB or SRB.
- rlc-Config: It may indicate RLC layer parameter configuration information of the RLC entity of the RLC bearer.

For example, rlc-Config may include at least one of the following configuration information.
- When the RLC entity is configured to an acknowledged mode (AM):
   * ul-AM-RLC configuration information: The ul-AM-RLC configuration information may include information on at least one of a length of the sequence number (e.g., sn-FieldLength), a size of a poll retransmission timer (e.g., t-PollRetransmit), a threshold value of the number of poll-trigger PDUs (e.g., pollPDU), a threshold value of a poll trigger byte (e.g., pollByte), or the maximum number of retransmissions (e.g., maxRetxThreshold).
   * dl-AM-RLC configuration information: The dl-AM-RLC configuration information may include information on at least one of a length of the sequence number (e.g., sn-FieldLength), a size of the reassembly timer (e.g., t-Reassembly), or a size of the STATUS PDU prohibit timer (e.g., t-StatusProhibit).
- When the RLC entity is configured to a unacknowledged mode (UM) bi-directional mode:
   * ul-UM-RLC configuration information: ul-UM-RLC configuration information may include information on a length of the sequence number (e.g., sn-FieldLength).
   * dl-UM-RLC configuration information: The dl-UM-RLC configuration information may include information on at least one of a length of the sequence number (e.g., sn-FieldLength), or a size of a reassembly timer (e.g., t-Reassembly).
- When the RLC entity is configured to a UM uni-directional-UL mode:
   * ul-UM-RLC configuration information: ul-UM-RLC configuration information may include information on a length of the sequence number (e.g., sn-FieldLength).
- When the RLC entity is configured to a UM uni-directional-DL mode:
   * dl-UM-RLC configuration information: The dl-UM-RLC configuration information may include information on at least one of a length of the sequence number (e.g., sn-FieldLength), or a size of the reassembly timer (e.g., t-Reassembly).

The UE that has established an RRC connection may enter an RRC_CONNECTED mode. The UE may transmit an RRCSetupComplete message to the base station in step 310.

If the base station does not know capabilities of the UE that is currently establishing a connection, or if the base station needs to determine capabilities of the UE, the base station may transmit, in step 315, a message (e.g., UECapabilityEnquiry) to the UE to inquire about the capabilities of the UE.

The UE may transmit, in step 320, a message reporting its capabilities (e.g., UECapabilityInformation) to the base station. The UE capability reporting message may include an indicator indicating whether the UE supports a low-latency RLC polling function.

The base station may determine whether the UE supports a low-latency RLC polling function. If the UE supports a low-latency RLC polling function, the base station may transmit or deliver low-latency RLC polling-related configuration information to the UE via an RRC message (e.g., RRCReconfiguration message (at least one of a message 335 or 350)).

The base station may transmit a SecurityModeCommand message 325 to the UE in step 325 in order to configure security with the UE. The UE may transmit a SecurityModeComplete message to the base station in step 330. When the security configuration is completed, the base station may transmit an RRCReconfiguration message to the UE in step 335.

For example, the RRCReconfiguration message may include configuration information (e.g., RadioBearerConfig) for each radio bearer (e.g., at least one of a DRB or an SRB). The radio bearer configuration information may include an ID of each radio bearer, configuration information for a PDCP entity of the radio bearer (e.g., PDCP-Config), an indicator indicating whether the radio bearer is a DAPS bearer, and the like.

For example, the RRCReconfiguration message may include, for each cell group (e.g., at least one of an MCG or an SCG), RLC bearer configuration information (e.g., RLC-BearerConfig) belonging to the cell group. The RLC bearer configuration information may include at least one of the following information.
- logicalChannelIdentity: It may indicate an LCID corresponding to the RLC bearer and/or entity.
- servedRadioBearer: It may indicate a radio bearer ID associated with the RLC bearer and/or entity. The radio bearer ID may indicate at least one of a specific DRB or SRB.
- rlc-Config: It may indicate RLC layer parameter configuration information of the RLC entity of the RLC bearer.

For example, the rlc-Config may include at least one of the following configuration information.
- When the RLC entity is configured to an acknowledged mode (AM):
   * ul-AM-RLC configuration information: The ul-AM-RLC configuration information may include information on at least one of a length of a sequence number (e.g., sn-FieldLength), a size of a poll retransmission timer (e.g., t-PollRetransmit), a threshold value for a number of poll-trigger PDUs (e.g., pollPDU), a threshold value for poll-trigger bytes (e.g., pollByte), or a maximum number of retransmissions (e.g., maxRetxThreshold). For example, if the UE supports low-latency RLC polling, a configuration related to low-latency RLC polling may be included.
   * dl-AM-RLC configuration information: The dl-AM-RLC configuration information may include information on at least one of a length of a sequence number (e.g., sn-FieldLength), a size of a reassembly timer (e.g., t-Reassembly), or a size of a STATUS PDU prohibit timer (e.g., t-StatusProhibit). For example, if the UE supports low-latency RLC polling, a configuration related to low-latency RLC polling may be included.
- When the RLC entity is configured to a unacknowledged mode (UM) bi-directional mode:
   * ul-UM-RLC configuration information: The ul-UM-RLC configuration information may include information on a length of the sequence number (e.g., sn-FieldLength).
   * dl-UM-RLC configuration information: The dl-UM-RLC configuration information may include information on at least one of a length of the sequence number (e.g., sn-FieldLength), or a size of the reassembly timer (e.g., t-Reassembly).
- When the RLC entity is configured to a UM uni-directional-UL mode:
   * ul-UM-RLC configuration information: The ul-UM-RLC configuration information may include information on a length of the sequence number (e.g., sn-FieldLength).
- When the RLC entity is configured to a UM uni-directional-DL mode:
   * dl-UM-RLC configuration information: The dl-UM-RLC configuration information may include information on at least one of a length of the sequence number (e.g., sn-FieldLength), or a size of the reassembly timer (e.g., t-Reassembly).

A typical data transmission process may be composed of three steps of RRC connection configuration, security configuration, and DRB configuration. The base station may transmit an RRCReconfiguration message to the UE in step 350 in order to newly configure, add, or change a configuration.

For example, the RRCReconfiguration message may include configuration information (e.g., RadioBearerConfig) for each radio bearer (e.g., at least one of a DRB or an SRB). The radio bearer configuration information may include an ID of each radio bearer, configuration information for a PDCP entity of the radio bearer (e.g., PDCP-Config), an indicator indicating whether the radio bearer is a DAPS bearer, and the like.

For example, the RRCReconfiguration may include, for each cell group (e.g., at least one of an MCG or an SCG), RLC bearer configuration information (e.g., RLC-BearerConfig) belonging to the cell group. The RLC bearer configuration information may include at least one of the following information.
- logicalChannelIdentity: It may indicate an LCID corresponding to the RLC bearer and/or entity.
- servedRadioBearer: It may indicate a radio bearer ID associated with an RLC bearer and/or entity. The radio bearer ID may indicate at least one of a specific DRB or SRB.
- rlc-Config: It may indicate RLC layer parameter configuration information of the RLC entity of the RLC bearer.

For example, the rlc-Config may include at least one of the following configuration information.
- When the RLC entity is configured to an acknowledged mode (AM):
   * ul-AM-RLC configuration information: The ul-AM-RLC configuration information may include information on at least one of a length of a sequence number (e.g., sn-FieldLength), a size of a poll retransmission timer (e.g., t-PollRetransmit), a threshold value of a number of poll-trigger PDUs (e.g., pollPDU), a threshold value for poll-trigger bytes (e.g., pollByte), or a maximum number of retransmissions (e.g., maxRetxThreshold). For example, if the UE supports low-latency RLC polling, a configuration related to low-latency RLC polling may be added.
   * dl-AM-RLC configuration information: The dl-AM-RLC configuration information may include information on at least one of a length of a sequence number (e.g., sn-FieldLength), a size of a reassembly timer (e.g., t-Reassembly), or a size of a STATUS PDU prohibit timer (e.g., t-StatusProhibit). For example, if the UE supports low-latency RLC polling, a configuration related to low-latency RLC polling may be added.
- When the RLC entity is configured to unacknowledged mode (UM) Bi-Directional mode:
   * ul-UM-RLC configuration information: The ul-UM-RLC configuration information may include information on a length of the sequence number (e.g., sn-FieldLength).
   *: The dl-UM-RLC configuration information may include information on at least one of a length of the sequence number (e.g., sn-FieldLength), or a size of the reassembly timer (e.g., t-Reassembly).
- When the RLC entity is configured to a UM uni-directional-UL mode:
   * ul-UM-RLC configuration information: The ul-UM-RLC configuration information may include information on a length of the sequence number (e.g., sn-FieldLength).
- When the RLC entity is configured to a UM uni-directional-DL mode:
   * dl-UM-RLC configuration information: The dl-UM-RLC configuration information may include information on at least one of a length of the sequence number (e.g., sn-FieldLength), or a size of the reassembly timer (e.g., t-Reassembly).

In an embodiment of the disclosure, the UE may perform at least one of configuration of each radio bearer, configuration of a PDCP entity, configuration of RLC bearers and/or layer entities associated with each radio bearer and/or the PDCP entity, establishment of associations between an RLC layer entity and a PDCP layer entity, or transmission and reception of data (e.g., at least one of step 345 or step 355), based on a radio bearer configuration included in an RRC message (e.g., RRCReconfiguration). For example, when the base station configures a low-latency RLC polling function to the UE through an RRC message (e.g., RRCReconfiguration), the UE may perform low-latency RLC polling during a data transmission and reception process (e.g., at least one of step 345 or step 355).

In an embodiment of the disclosure, among RLC SDUs in an RLC entity, a delay-critical RLC SDU may be defined as follows.
- A delay-critical RLC SDU may refer to an RLC SDU corresponding to a PDCP PDU indicated as delay-critical by PDCP (see TS 38.323).

For example, if a specific PDCP SDU in a PDCP entity of a UE is a delay-critical PDCP SDU, and if a PDCP data PDU including the PDCP SDU is delivered to a lower layer of the UE (e.g., RLC), a delay-critical indication for the PDCP data PDU may be transmitted, delivered, or provided to the lower layer (e.g., RLC) of the UE through internal signaling of the UE.

For example, a delay-critical PDCP SDU may be defined as follows.
- If the PDCP entity-specific configuration (e.g., pdu-SetDiscard) of the radio bearer of the UE via RRC is not configured, this may refer to a PDCP SDU whose remaining time till the timer (e.g., discardTimer) expires is less than the time (e.g., remainingTimeThreshold) configured by the base station via RRC for each LCG of the UE. If the PDCP entity-specific configuration (e.g., pdu-SetDiscard) of the radio bearer of the UE via RRC is configured, this may refer to a PDCP SDU belonging to a PDU set including at least one PDCP SDU whose remaining time till the timer (e.g., discardTimer) expires is less than the time (e.g., remainingTimeThreshold) configured by the base station via RRC for each LCG of the UE.

For example, for a delay status report (hereinafter, DSR) reported at the MAC layer, the PDCP and RLC entities of the UE may calculate a delay-critical PDCP data volume and a delay-critical RLC data volume as follows.

For example, when calculating a delay-critical PDCP data volume, the UE may include at least one of the following items from the PDCP entity.
- Delay-critical data-P1: For example, it may mean the delay-critical PDCP SDUs for which no PDCP data PDUs have been constructed.
- Delay-critical data-P2: For example, it may mean the PDCP data PDUs that contain the delay-critical PDCP SDUs and have not been submitted to lower layers (e.g., RLC).
- Delay-critical data-P3: For example, it may mean PDCP Control PDUs.
- Delay-critical data-P4: For example, for AM DRBs, it may mean the PDCP SDUs to be retransmitted according to clause 5.1.2 and clause 5.13 of TS 38.323.
- Delay-critical data-P5: For example, for AM DRBs, it may mean the PDCP data PDUs to be retransmitted according to clause 5.5 of TS 38.323.

For example, when calculating a delay-critical RLC data volume, the UE may include at least one of the following items of the RLC entity.
- Delay-critical data-R1: For example, it may mean at least one of delay-critical RLC SDUs and delay-critical RLC SDU segments that have not yet been included in an RLC data PDU.
- Delay-critical data-R2: For example, it may mean RLC data PDUs pending for initial transmission, and including a delay-critical RLC SDU or a delay-critical RLC SDU segment.
- Delay-critical data-R3: For example, if the RLC entity is in an AM mode, this may mean RLC data PDUs that are pending for retransmission (RLC AM).
- Delay-critical data-R4: For example, if a STATUS PDU is triggered, and the t-StatusProhibit timer is not running or has expired, the UE may estimate the size of the STATUS PDU to be transmitted at the next transmission opportunity (e.g., Transmission Opportunity) and include it in the delay-critical RLC data volume.

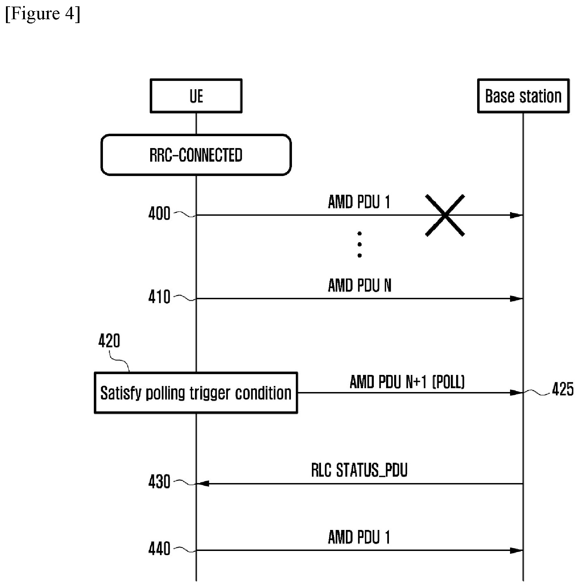

FIG. 4 is a signal flow diagram illustrating a procedure for performing RLC polling of an RLC entity of a UE according to an embodiment of the disclosure.

With reference to FIG. 4, a UE in an RRC_CONNECTED state may transmit an RLC PDU to a base station via an uplink (hereinafter, UL). For example, when a specific RLC entity of the UE is configured in an AM mode, the RLC entity of the UE may request a reception status for an AM data (AMD) PDU transmitted by the UE to a corresponding RLC entity of the base station. The reception status request for the PDU may be transmitted or delivered to the base station from the RLC entity of the UE by configuring a poll (P) bit of an RLC header of the specific AMD PDU to 1. The base station may transmit a reception status of the AMD PDU transmitted by the RLC entity of the UE to the UE via a STATUS PDU. The RLC entity of the UE may perform retransmission for an AMD PDU that the corresponding RLC entity of the base station failed to receive (e.g., for which a NACK is received).

The RLC entity of the UE may request transmission of a STATUS PDU from the base station (e.g., polling or perform polling) by configuring a poll (P) bit of a header of a specific AMD PDU to 1 when a specific polling trigger condition is satisfied. A polling delay that may occur before the specific polling trigger condition is satisfied may result in a retransmission delay.

For example, the corresponding RLC entity of the base station may fail to receive AMD PDU 1 (SN=1, 400) transmitted by the RLC entity of the UE. In order for retransmission 440 due to the reception failure to occur, a polling trigger condition 420 of the RLC entity of the UE is satisfied, a P bit of a specific AMD PDU (SN=N+1, 425) is configured to 1 and transmitted or delivered to the base station, a STATUS PDU is triggered at the corresponding RLC entity of the base station in response to the polling, and a STATUS PDU 430 including the reception failure for AMD PDU 1 is delivered to the UE.

When polling is delayed, retransmission of an AMD PDU that fails to be received may be delayed. If retransmission of delay-critical data is delayed, retransmission of data exceeding at least one of a packet delay budget (PDB) or a PDU set delay budget (PSDB) for the delay-critical data may become meaningless. Further, quality of service for a user may be degraded. The low-latency RLC polling method proposed in the disclosure provides a method and device for reducing polling delay and retransmission delay for delay-critical data.

In an embodiment of the disclosure, if the UE supports an enhanced RLC function for delay-critical data, the base station may configure, for the UE, at least one of a threshold value used for a new polling trigger (e.g., at least one of pollDelayCriticalPDU or pollDelayCriticalByte) or a new polling retransmission timer (e.g., t-pollDelayCriticalRetransmit) for delay-critical RLC data via an RRC message (e.g., RRCReconfiguration (e.g., at least one of 335 or 350 of FIG. 3)).

In an embodiment of the disclosure, the AM RLC entity may use, for delay-critical RLC data, at least one of a new polling trigger variable (e.g., at least one of DELAY_CRITICAL_PDU_WITHOUT_POLL, or DELAY_CRITICAL_BYTE_WITHOUT_POLL), or a new POLL_SN variable (e.g., DELAY_CRITICAL_POLL_SN).

In an embodiment of the disclosure, variables, counters, and timers of each AM RLC entity may include at least one of the following.

POLL_SN - Poll send state variable
- This state variable holds the value of the highest SN of the AMD PDU among the AMD PDUs submitted to lower layer when POLL_SN is set according to clause 5.3.3.2 of TS38.322. It is initially set to 0.

DELAY_CRITICAL_POLL_SN - Poll send state variable for delay-critical data
- This state variable holds the value of the highest SN of the delay-critical AMD PDU among the delay-critical AMD PDUs submitted to lower layer when DELAY_CRITICAL_POLL_SN is set according to TS38.322. It is initially set to 0.

PDU_WITHOUT_POLL - Counter
- This counter is initially set to 0. It counts the number of AMD PDUs sent since the most recent poll bit was transmitted.

BYTE_WITHOUT_POLL - Counter
- This counter is initially set to 0. It counts the number of data bytes sent since the most recent poll bit was transmitted.

DELAY_CRITICAL_PDU_WITHOUT_POLL - Counter
- This counter is initially set to 0. It counts the number of delay-critical AMD PDUs sent since the most recent poll bit was transmitted.

DELAY_CRITICAL_BYTE_WITHOUT_POLL - Counter
- This counter is initially set to 0. It counts the number of data bytes sent by delay-critical AMD PDUs since the most recent poll bit was transmitted.

t-PollRetransmit
- This timer is used by the transmitting side of an AM RLC entity in order to retransmit a poll (see clause 5.3.3 of TS 38.322).

t-PollDelayCriticalRetransmit
- This timer is used by the transmitting side of an AM RLC entity in order to retransmit a poll triggered by delay-critical AMD PDU.

For example, a delay-critical AMD PDU may indicate at least one of the following cases.
- The delay-critical AMD PDU may indicate an AMD PDU including at least one of a delay-critical RLC SDU or a delay-critical RLC SDU segment.

In an embodiment of the disclosure, a condition for triggering polling in an RLC entity operating in an AM mode may be satisfied when at least one of a new polling trigger threshold (e.g., at least one of pollDelayCriticalPDU or pollDelayCriticalByte), a configuration indicating a low-latency RLC polling function for delay-critical data, and/or a new polling retransmission timer (e.g., t-pollDelayCriticalRetransmit) is configured. However, the above-described conditions are merely examples of an embodiment. Among the above embodiments, combinations of a plurality of embodiments or conditions may exist, and such combinations may be regarded as new embodiments.

The following describes poll trigger methods that are performed when the above-described conditions are satisfied. The following methods correspond to embodiments, and combinations of a plurality of embodiments or methods described below may exist, and such combinations may be regarded as new embodiments.

### Poll Trigger Method 1:

When a transmission opportunity is received from or notified by a lower layer, the RLC entity may perform at least one of the following operations for each AMD PDU delivered to the lower layer.
- If the AMD PDU includes an RLC SDU or an RLC SDU segment that has not been previously transmitted and that includes a byte segment that has not been previously transmitted:
   * A PDU_WITHOUT_POLL variable may be incremented by 1.
   * A BYTE_WITHOUT_POLL variable may be incremented by the number of new bytes (e.g., bytes not previously transmitted) included in a data field element in a data field of an AMD PDU.
   * if $PDU_WITHOUT_POLL > = pollPDU ;$ or
   * If $BYTE_WITHOUT_POLL > = pollByte$
- Polling method 1 may be performed.

When an AMD PDU includes a poll, the transmitting AM RLC entity may perform at least one of the following operations.
- Configure a P field of AMD PDU to 1
- Configure PDU_WITHOUT_POLL to 0
- Configure BYTE_WITHOUT_POLL to 0

When an AMD PDU including a poll is delivered to a lower layer, the transmitting AM RLC entity may perform at least one of the following operations.
- The POLL_SN variable may be configured to an SN of an AMD PDU having the highest SN among AMD PDUs delivered to the lower layer.
- If the t-PollRetransmit timer is not running:
   * The t-PollRetransmit timer may be started.
- Otherwise (e.g., if the t-PollRetransmit timer is running):
   * The t-PollRetransmit timer may be restarted.

### Poll Trigger Method 2:

When a transmission opportunity is received from or notified by a lower layer, the RLC entity may perform at least one of the following operations for each AMD PDU delivered to the lower layer.
- If the AMD PDU includes a delay-critical RLC SDU or a delay-critical RLC SDU segment that has not been previously transmitted and that includes a byte segment that has not been previously transmitted:
   * A PDU_WITHOUT_POLL variable may be incremented by 1.
   * A BYTE_WITHOUT_POLL variable may be incremented by the number of new bytes (e.g., bytes not previously transmitted) included in a data field element in a data field of the AMD PDU.
   * if $PDU_WITHOUT_POLL > = pollDelayCriticalPDU ;$ or
   * if $PDU_WITHOUT_POLL > = pollPDU ;$ or
   * if $BYTE_WITHOUT_POLL > = pollDelayCriticalByte ;$ or
   * If $BYTE_WITHOUT_POLL > = pollByte :$
- Polling option 2-1: Polling method 1 may be performed.
- Polling option 2-2: Polling method 2 may be performed.

When a delay-critical AMD PDU includes a poll, the transmitting AM RLC entity may perform at least one of the following operations.
- Configure a P field of AMD PDU to 1
- Configure PDU_WITHOUT_POLL to 0
- Configure BYTE_WITHOUT_POLL to 0

When a delay-critical AMD PDU including a poll is delivered to a lower layer, the transmitting AM RLC entity may perform at least one of the following operations.
- Poll SN option 2-1: The POLL_SN variable may be configured to an SN of an AMD PDU having the highest SN among AMD PDUs delivered to the lower layer.
- Poll SN option 2-2: A DELAY_CRITICAL_POLL_SN variable may be configured to an SN of a delay-critical AMD PDU having the highest SN among delay-critical AMD PDUs delivered to the lower layer. If polling is triggered by delay-critical data, such polling may be considered as requesting ACK or NACK status information for the delay-critical data.
- Poll retx timer option 2-1:
   * If the t-PollRetransmit timer is not running:
      - The t-PollRetransmit timer may be started.
   * Otherwise (e.g., if the t-PollRetransmit timer is running):
      - The t-PollRetransmit timer may be restarted.
      - Poll retx timer option 2-2:
         * If the t-PollDelayCriticalRetransmit timer is not running:
            - The t-PollDelayCriticalRetransmit timer may be started.
         * Otherwise (e.g., if the t-PollDelayCriticalRetransmit timer is running):
            - The t-PollDelayCriticalRetransmit timer may be restarted.
         * Effect: The t-PollDelayCriticalRetransmit timer may refer to a timer for retransmitting a poll triggered by a delay-critical RLC AMD PDU (e.g., when a requested STATUS PDU is not received). Upon expiry of the timer, the RLC entity may retransmit the poll for the delay-critical RLC AMD PDU.

### Poll Trigger Method 3:

When a transmission opportunity is received from or notified by a lower layer, the RLC entity may perform at least one of the following operations for each AMD PDU delivered to the lower layer.
- If the AMD PDU includes a delay-critical RLC SDU or a delay-critical RLC SDU segment that has not been previously transmitted and that includes a byte segment that has not been previously transmitted:
   * A DELAY_CRITICAL_PDU_WITHOUT_POLL variable may be incremented by 1. For example, a PDU_WITHOUT_POLL variable may be incremented by 1. For example, PDU_WITHOUT_POLL may not be incremented.
   * A DELAY_CRITICAL_BYTE_WITHOUT_POLL variable may be incremented by the number of new bytes (e.g., bytes not previously transmitted) included in a data field element in a data field of an AMD PDU. For example, a BYTE_WITHOUT_POLL variable may be incremented by the number of new bytes (e.g., bytes not previously transmitted) included in a data field element of a data field of the AMD PDU. For example, the BYTE_WITHOUT_POLL variable may not be incremented.
   * $If DELAY_CRITICAL_PDU_WITHOUT_POLL > = pollDelayCriticalPDU ;$ or
   * $If PDU_WITHOUT_POLL > = pollPDU ;$ or
   * $If DELAY_CRITICAL_BYTE_WITHOUT_POLL > = pollDelayCriticalByte$ or
   * $If BYTE_WITHOUT_POLL > = pollByte :$
- Polling option 3-1: Polling method 1 may be performed.
- Polling option 3-2: Polling method 2 may be performed.

When a delay-critical AMD PDU includes a poll, the transmitting AM RLC entity may perform at least one of the following operations.
- A P field of the AMD PDU may be configured to 1.
- DELAY_CRITICAL_PDU_WITHOUT_POLL may be configured to 0. For example, PDU_WITHOUT_POLL may be configured to 0. For example, PDU_WITHOUT_POLL may remain unchanged (e.g., may not be incremented or decremented) or may not be configured to 0 (e.g., may not be reset to 0).
- DELAY_CRITICAL_BYTE_WITHOUT_POLL may be configured to 0. For example, BYTE_WITHOUT_POLL may be configured to 0. For example, BYTE_WITHOUT_POLL may remain unchanged (e.g., may not be incremented or decremented) or may not be configured to 0 (e.g., may not be reset to 0).

When a delay-critical AMD PDU including a poll is delivered to a lower layer, the transmitting AM RLC entity may perform at least one of the following operations.
- Poll SN option 3-1: The POLL_SN variable may be configured to an SN of an AMD PDU having the highest SN among AMD PDUs delivered to the lower layer.
- Poll SN option 3-2: The DELAY_CRITICAL_POLL_SN variable may be configured to an SN of a delay-critical AMD PDU having the highest SN among delay-critical AMD PDUs delivered to the lower layer. If polling is triggered by delay-critical data, such polling may be considered as requesting ACK or NACK status information for the delay-critical data.
- Poll retx timer option 3-1:
   * If the t-PollRetransmit timer is not running:
      - The t-PollRetransmit timer may be started.
   * Otherwise (e.g., if the t-PollRetransmit timer is running):
      - The t-PollRetransmit timer may be restarted.
      - Poll retx timer option 3-2:
         * If the t-PollDelayCriticalRetransmit timer is not running:
            - The t-PollDelayCriticalRetransmit timer may be started.
         * Otherwise (e.g., if the t-PollDelayCriticalRetransmit timer is running):
            - The t-PollDelayCriticalRetransmit timer may be restarted.
         * Effect: The t-PollDelayCriticalRetransmit timer may refer to a timer for retransmitting a poll triggered by a delay-critical RLC AMD PDU (e.g., when a requested STATUS PDU is not received). Upon expiry of the timer, the RLC entity may retransmit the poll for the delay-critical RLC AMD PDU.

### Poll Trigger Method 4:

When a transmission opportunity is notified by a lower layer, the RLC entity may perform at least one of the following operations for each AMD PDU delivered to the lower layer.
- If, after transmitting a specific AMD PDU, both the transmission buffer and the retransmission buffer are empty (excluding at least one of an RLC SDU or an RLC SDU segment that has already been transmitted and is awaiting an ACK); or
- If a new RLC SDU cannot be generated after transmitting the corresponding AMD PDU (e.g., when a window stalling condition occurs):
   * Polling method 1 may be performed.
   * If there are RLC SDUs or RLC SDU segments that have already been transmitted and are awaiting an ACK, and at least one of the RLC SDUs or RLC SDU segments is a delay-critical RLC SDU or a delay-critical RLC SDU segment, the RLC entity may perform polling method 1 or polling method 2.

When an AMD PDU includes a poll, the transmitting RLC entity may perform at least one of the following operations.
- A P field of the AMD PDU may be configured to 1.
- PDU_WITHOUT_POLL may be configured to 0. For example, DELAY_CRITICAL_PDU_WITHOUT_POLL may be configured to 0. For example, DELAY_CRITICAL_PDU_WITHOUT_POLL may remain unchanged (e.g., may not be incremented or decremented) or may not be configured to 0 (e.g., may not be reset to 0).
- BYTE_WITHOUT_POLL may be configured to 0. For example, DELAY_CRITICAL_BYTE_WITHOUT_POLL may be configured to 0. For example, DELAY_CRITICAL_BYTE_WITHOUT_POLL may remain unchanged (e.g., may not be incremented or decremented) or may not be configured to 0 (e.g., may not be reset to 0).

### Poll Trigger Method 5:

The base station may establish a configuration 1 (e.g., pollForDelayCritical) for a specific AM mode RLC entity of the UE via an RRC message (e.g., RRCReconfiguration). For example, the pollForDelayCritical may be configured as a 1-bit BOOLEAN or other format.

In an embodiment of the disclosure, when a transmission opportunity is notified by a lower layer, the RLC entity may perform at least one of the following operations for each AMD PDU delivered to the lower layer.
- If the AMD PDU includes at least one of a delay-critical RLC SDU or a delay-critical RLC SDU segment that has not been previously transmitted and that includes a byte segment that has not been previously transmitted:
   - For example, if pollForDelayCritical is configured, the UE
      * may perform polling method 1. Alternatively,
      * the UE may perform polling method 2.
   - For example, regardless of whether pollForDelayCritical is configured, the UE
      * may perform polling method 1. Alternatively,
      * the UE may perform polling method 2.

When a delay-critical AMD PDU includes a poll, the transmitting AM RLC entity may perform at least one of the following operations.
- A P field of the AMD PDU may be configured to 1.
- DELAY_CRITICAL_PDU_WITHOUT_POLL may be configured to 0. For example, PDU_WITHOUT_POLL may be configured to 0. For example, PDU_WITHOUT_POLL may remain unchanged (e.g., may not be incremented or decremented) or may not be configured to 0 (e.g., may not be reset to 0).
- DELAY_CRITICAL_BYTE_WITHOUT_POLL may be configured to 0. For example, BYTE_WITHOUT_POLL may be configured to 0. For example, BYTE_WITHOUT_POLL may remain unchanged (e.g., may not be incremented or decremented) or may not be configured to 0 (e.g., may not be reset to 0).

When a delay-critical AMD PDU including a poll is delivered to a lower layer, the transmitting AM RLC entity may perform at least one of the following operations.
- Poll SN option 5-1: The POLL_SN variable may be configured to an SN of an AMD PDU having the highest SN among AMD PDUs delivered to the lower layer.
- Poll SN option 5-2: The DELAY_CRITICAL_POLL_SN variable may be configured to an SN of a delay-critical AMD PDU having the highest SN among delay-critical AMD PDUs delivered to the lower layer. If polling is triggered by delay-critical data, such polling may be considered as requesting ACK or NACK status information for the delay-critical data.
- Poll retx timer option 5-1:
   * If the t-PollRetransmit timer is not running:
      - The t-PollRetransmit timer may be started.
   * Otherwise (e.g., if the t-PollRetransmit timer is running):
      - The t-PollRetransmit timer may be restarted.
      - Poll retx timer option 5-2:
         * If the t-PollDelayCriticalRetransmit timer is not running:
            - The t-PollDelayCriticalRetransmit timer may be started.
         * Otherwise (e.g., if the t-PollDelayCriticalRetransmit timer is running):
            - The t-PollDelayCriticalRetransmit timer may be restarted.
         * Effect: The t-PollDelayCriticalRetransmit timer may refer to a timer for retransmitting a poll triggered by a delay-critical RLC AMD PDU (e.g., when a requested STATUS PDU is not received). Upon expiry of the timer, the RLC entity may retransmit the poll for the delay-critical RLC AMD PDU.

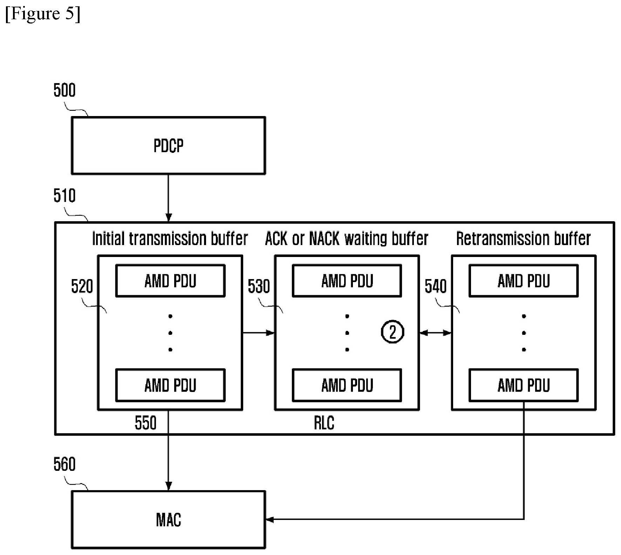

FIG. 5 is a block diagram illustrating an RLC polling procedure in an AM RLC entity according to an embodiment of the disclosure.

With reference to FIG. 5, an AM RLC entity 510 may include a PDCP PDU received from a PDCP entity 500 in an AMD PDU and deliver the PDU to a lower layer. For example, a buffer maintained by the AM RLC entity may refer to any one of the following buffers.
- Buffer 1: An initial transmission buffer 520 configured to store AMD PDUs awaiting initial transmission.
- Buffer 2: An ACK or NACK waiting buffer 530 configured to store at least one of an AM RLC SDU or an AMD PDU that has been transmitted and is awaiting an ACK or NACK from a corresponding receiving RLC entity.
- Buffer 3: A retransmission buffer 540 configured to store at least one AM RLC SDU or AMD PDU for which a NACK has been received from a corresponding receiving RLC entity, for retransmission.

When an AMD PDU is delivered to a lower layer, the AMD PDU may not be a delay-critical AMD PDU. After initial transmission, while awaiting an ACK, the AMD PDU may become at least one of a delay-critical RLC SDU or AMD PDU. Therefore, a polling method triggered by at least one of a delay-critical RLC SDU or AMD PDU in the buffer 2 may be required.

In an embodiment of the disclosure, the base station may establish a configuration 2 (e.g., pollForPendingPDU) for a specific AM RLC entity of the UE via an RRC message (e.g., RRCReconfiguration). For example, an AM RLC entity for which pollForPendingPDU is configured may trigger polling by at least one of delay-critical AM RLC SDUs or AMD PDUs stored in the buffer 2. For example, the AM RLC entity for which pollForPendingPDU is configured may perform at least one of the following embodiments.

### Poll Trigger Method 6:

In an embodiment of the disclosure, an AM RLC entity for which pollForPendingPDU is configured may perform at least one of the following operations for each RLC SDU or RLC SDU segment that has been transmitted and is awaiting an ACK (e.g., in buffer 2).
- If at least one of an RLC SDU or an RLC SDU segment becomes at least one of a delay-critical RLC SDU or a delay-critical RLC SDU segment:
   * A DELAY_CRITICAL_PDU_WITHOUT_POLL variable may be incremented by 1.
   * A DELAY_CRITICAL_BYTE_WITHOUT_POLL variable may be incremented by the size (in bytes) of at least one of the corresponding RLC SDU or RLC SDU segment.
- *If $DELAY_CRITICAL_PDU_WITHOUT_POLL > = pollDelayCriticalPDU ;$ or
   * If $DELAY_CRITICAL_BYTE_WITHOUT_POLL > = pollDelayCriticalByte$ or
- The AMD PDU delivered to the next lower layer may include a poll.

If, in at least one of a poll trigger time or a time at which a next transmission opportunity is notified by a lower layer, the buffer 1, 520 and the buffer 3, 540 are empty (excluding at least one of an RLC SDU or an RLC SDU segment that has already been transmitted and is awaiting ACK), the UE
- Option 1: Among delay-critical RLC SDUs or RLC SDU segments for which an ACK has not yet been received, at least one of a delay-critical RLC SDU or RLC SDU segment having the shortest remaining time until expiry of the PDCP discardTimer time (e.g., the time remaining until the PDCP discardTimer expires) (in this case, the shortest remaining time may be non-zero) may be retransmitted.
- Option 2: At least one of a delay-critical RLC SDU or RLC SDU segment that triggered a poll may be retransmitted.

When an AMD PDU includes a poll triggered by at least one of a delay-critical RLC SDU or RLC SDU segment, the transmitting AM RLC entity may perform at least one of the following operations.
- A P field of the AMD PDU may be configured to 1.
- DELAY_CRITICAL_PDU_WITHOUT_POLL may be configured to 0. For example, PDU_WITHOUT_POLL may be configured to 0. For example, PDU_WITHOUT_POLL may remain unchanged (e.g., may not be incremented or decremented) or may not be configured to 0 (e.g., may not be reset to 0).
- DELAY_CRITICAL_BYTE_WITHOUT_POLL may be configured to 0. For example, BYTE_WITHOUT_POLL may be configured to 0. For example, BYTE_WITHOUT_POLL may remain unchanged (e.g., may not be incremented or decremented) or may not be configured to 0 (e.g., may not be reset to 0).

When an AMD PDU including a poll triggered by at least one of a delay-critical RLC SDU/RLC SDU segment or an AMD PDU is delivered to a lower layer, the transmitting AM RLC entity may perform at least one of the following operations.
- Poll SN option 6-1: The POLL_SN variable may be configured to an SN of an AMD PDU having the highest SN among AMD PDUs delivered to the lower layer.
- Poll SN option 6-2: The DELAY_CRITICAL_POLL_SN variable may be configured to an SN of a delay-critical AMD PDU having the highest SN among delay-critical AMD PDUs delivered to the lower layer. If polling is triggered by delay-critical data, such polling may be considered as requesting ACK or NACK status information for the delay-critical data.
- Poll retx timer option 6-1:
   * If the t-PollRetransmit timer is not running:
      - The t-PollRetransmit timer may be started.
   * Otherwise (e.g., if the t-PollRetransmit timer is running):
      - The t-PollRetransmit timer may be restarted.
      - Poll retx timer option 6-2:
         * If the t-PollDelayCriticalRetransmit timer is not running:
            - The t-PollDelayCriticalRetransmit timer may be started.
         * Otherwise (e.g., the t-PollDelayCriticalRetransmit timer is running):
            - The t-PollDelayCriticalRetransmit timer may be restarted.
         * Effect: The t-PollDelayCriticalRetransmit timer may refer to a timer for retransmitting a poll triggered by a delay-critical RLC AMD PDU (e.g., when a requested STATUS PDU is not received). Upon expiry of the timer, polling for delay-critical RLC AMD PDUs may be retransmitted.

### Poll Trigger Method 7:

In an embodiment of the disclosure, an AM RLC entity for which pollForPendingPDU is configured may perform at least one of the following operations for at least one of each RLC SDU or each RLC SDU segment transmitted while awaiting an ACK (e.g., in buffer 2).
- Option 1: If at least one of the RLC SDU or the RLC SDU segment becomes a delay-critical RLC SDU or a delay-critical RLC SDU segment:
- Option 2: If there is at least one of the delay-critical RLC SDU or RLC SDU segment in the buffer 2:
   * The AMD PDU delivered to the next lower layer may include a poll.

If, in at least one of a poll trigger time or a time at which a next transmission opportunity is notified by a lower layer, the buffer 1, 520 and the buffer 3, 540 are empty (excluding at least one of an RLC SDU or an RLC SDU segment that has already been transmitted and is awaiting an ACK), the UE
- Option 1: Among delay-critical RLC SDUs or RLC SDU segments for which an ACK has not yet been received, at least one of a delay-critical RLC SDU or RLC SDU segment having a shortest remaining time of a PDCP discardTimer (e.g., a time remaining until expiry of the PDCP discardTimer) (in this case, the shortest remaining time may be non-zero) may be retransmitted.
- Option 2: At least one of a delay-critical RLC SDU or RLC SDU segment that triggered the poll may be retransmitted.

When an AMD PDU includes a poll triggered by at least one of a delay-critical RLC SDU or RLC SDU segment, the transmitting AM RLC entity may perform at least one of the following operations.
- A P field of the AMD PDU may be configured to 1.
- DELAY_CRITICAL_PDU_WITHOUT_POLL may be configured to 0. For example, PDU_WITHOUT_POLL may be configured to 0. For example, PDU_WITHOUT_POLL may remain unchanged (e.g., may not be incremented or decremented) or may not be configured to 0 (e.g., may not be reset to 0).
- DELAY_CRITICAL_BYTE_WITHOUT_POLL may be configured to 0. For example, BYTE_WITHOUT_POLL may be configured to 0. For example, BYTE_WITHOUT_POLL may remain unchanged (e.g., may not be incremented or decremented) or may not be configured to 0 (e.g., may not be reset to 0).

When an AMD PDU including a poll triggered by at least one of a delay-critical RLC SDU, an RLC SDU segment, or an AMD PDU is delivered to a lower layer, the transmitting AM RLC entity may perform at least one of the following operations.
- Poll SN option 6-1: The POLL_SN variable may be configured to an SN of an AMD PDU having the highest SN among AMD PDUs that have been delivered to the lower layer.
- Poll SN option 6-2: The DELAY_CRITICAL_POLL_SN variable may be configured to an SN of a delay-critical AMD PDU having the highest SN among delay-critical AMD PDUs delivered to the lower layer. If polling is triggered by delay-critical data, such polling may be considered as requesting ACK or NACK status information for the delay-critical data.
- Poll retx timer option 6-1:
   * If the t-PollRetransmit timer is not running:
      - The t-PollRetransmit timer may be started.
   * Otherwise (e.g., if the t-PollRetransmit timer is running):
      - The t-PollRetransmit timer may be restarted.
- Poll retx timer option 6-2:
   * If the t-PollDelayCriticalRetransmit timer is not running:
      - The t-PollDelayCriticalRetransmit timer may be started.
   * Otherwise (e.g., if the t-PollDelayCriticalRetransmit timer is running):
      - The t-PollDelayCriticalRetransmit timer may be restarted.
   * Effect: The t-PollDelayCriticalRetransmit timer may refer to a timer for retransmitting a poll triggered by a delay-critical RLC AMD PDU (e.g., when a requested STATUS PDU is not received). Upon expiry of the timer, the poll for the delay-critical RLC AMD PDU may be retransmitted.

In an embodiment of the disclosure, upon expiry of the t-PollDelayCriticalRetransmit timer, the transmitting AM RLC entity may perform at least one of the following operations.
- If an initial transmission buffer and a retransmission buffer are empty (excluding at least one of an RLC SDU or an RLC SDU segment that has already been transmitted and is awaiting an ACK); or
- When a new RLC SDU or RLC SDU segment cannot be generated (e.g., when a window stalling condition occurs).
   * Option 1: The transmitting AM RLC entity may retransmit an RLC SDU having the highest SN among RLC SDUs delivered to the lower layer.
   * Option 2: The transmitting AM RLC entity may retransmit any RLC SDU for which an ACK has not yet been received.
   * Option 3: The transmitting AM RLC entity may retransmit, among delay-critical RLC SDUs for which an ACK has not yet been received, a delay-critical RLC SDU having a shortest remaining time until expiry of a discardTimer.
- The transmitting AM RLC entity may include a poll in an AMD PDU and transmit the AMD PDU.

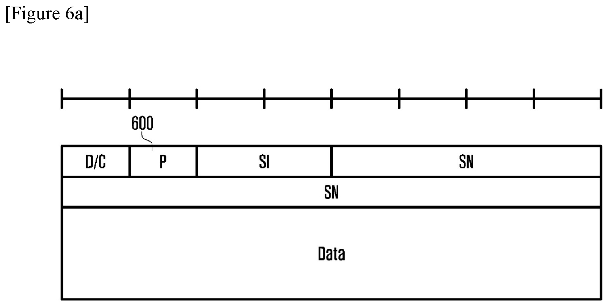

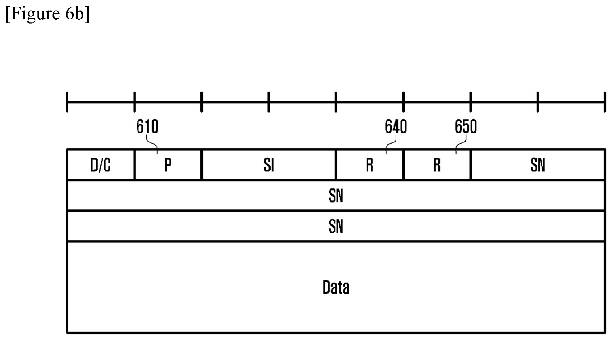

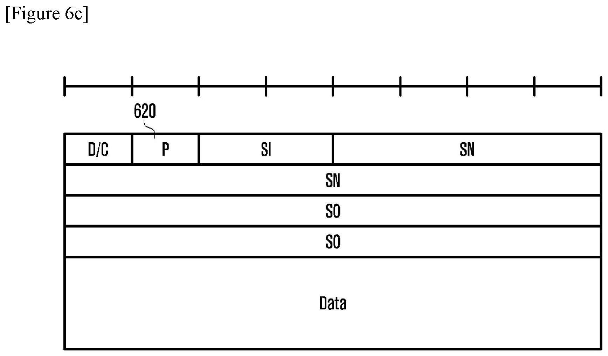

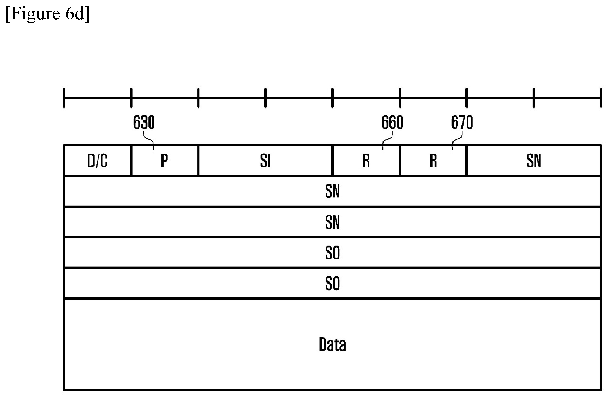

FIGS. 6A, 6B, 6C, and 6D are diagrams illustrating an AM RLC PDU format according to an embodiment of the disclosure.

With reference to FIGS. 6A, 6B, 6C, and 6D, polling method 1 may be performed as follows.

Polling method 1: In an existing AMD PDU format, polling may be indicated by configuring a P field of an RLC header (e.g., at least one of 600, 610, 620, or 630) to 1.

With reference to FIGS. 6A, 6B, 6C, and 6D, polling method 2 may be performed as follows.

### Polling method 2

- Option 2-1: Polling triggered by delay-critical RLC data (e.g., at least one of an RLC SDU, an SDU segment, or an AMD PDU) may be indicated by configuring at least one reserved bit of an RLC header (e.g., at least one of 640, 650, 660, or 670) in an AMD PDU format to 1.
- Option 2-2: A new AMD PDU format may be introduced, in which each polling may be distinguished and indicated through two P bits (e.g., at least one of P1 or P2) included in an RLC header of the new format. The two P bits may be used to distinguish between polling triggered by delay-critical RLC data and polling triggered by non-delay-critical RLC data.
- Option 2-3: A new RLC control PDU may be introduced and transmitted to indicate polling triggered by delay-critical RLC data.

In an embodiment of the disclosure, an AM RLC entity may transmit a STATUS PDU to a corresponding AM RLC entity to provide at least one of ACK or NACK information for a received RLC SDU.

In an embodiment of the disclosure, conditions under which a STATUS report is triggered may include at least one of the following.
- When a poll according to the above-described polling method 1 is received from a corresponding AM RLC entity:
   * If the SN of the AMD PDU received from the lower layer is x and the P field thereof is configured to 1, the receiving AM RLC entity
- Case 1: If the AMD PDU is discarded according to clause 5.2.3.2.2 of TS38.322, or
- Case 2: If x < RX_Highest_Status or x >= RX_Next + AM_Window_Size
- A STATUS report may be triggered. In this case, the triggering may be performed immediately.
- Case 3: Otherwise (i.e., neither case 1 nor case 2):
- The receiving AM RLC entity may delay the STATUS report trigger until x < RX_Highest_Status or x >= RX_Next + AM_Window_Size.
- When a poll according to polling method 2 (e.g., triggered by delay-critical RLC data) is received from a corresponding AM RLC entity:
   * The receiving AM RLC entity may trigger a STATUS report. In this case, the triggering may be performed immediately.
   * For example, the receiving AM RLC entity may generate a STATUS PDU and deliver the STATUS PDU to the lower layer at a first transmission opportunity indicated by the lower layer, regardless of whether the t-StatusProhibit timer is running.
- If a reception failure of an AMD PDU is detected:
   * The receiving AM RLC entity may trigger a STATUS report upon expiry of the t-Reassembly timer.

In an embodiment of the disclosure, when a STATUS report is received, the AM RLC entity may perform at least one of the following operations.
- If the STATUS report includes at least one of ACK (positive) or NACK (negative) information for an RLC SDU corresponding to POLL_SN:
   * For example, if a t-PollRetransmit timer is running, the t-PollRetransmit timer may be stopped and reset. Alternatively, for example, if a t-PollDelayCriticalRetransmit timer is running, the t-PollDelayCriticalRetransmit timer may be stopped and reset.
- If the STATUS report includes at least one of ACK (positive) or NACK (negative) information for the RLC SDU corresponding to the above-described DELAY_CRTICAL_POLL_SN:
   * For example, if the t-PollRetransmit timer is running, the t-PollRetransmit timer may be stopped and reset. Alternatively, for example, if the t-PollDelayCriticalRetransmit timer is running, the t-PollDelayCriticalRetransmit timer may be stopped and reset.

In an embodiment of the disclosure, the AM RLC entity may perform retransmission of RLC data when delay-critical RLC data (e.g., at least one of an RLC SDU, an RLC SDU segment, or an AMD PDU) is present in a buffer 2. The AM RLC entity may perform blind retransmission for delay-critical data even without reception feedback (e.g., at least one of an ACK or a NACK) for the corresponding RLC data (e.g., at least one of an RLC SDU, an RLC SDU segment, or an AMD PDU).

In an embodiment of the disclosure, blind retransmission may refer to an operation of retransmitting at least one of an RLC SDU, an SDU segment, or an AMD PDU before receiving ACK/NACK feedback for at least one of the already transmitted RLC SDU, SDU segment, or AMD PDU through a STATUS PDU. For example, the base station may configure, via an RRC message (e.g., RRCReconfiguration message), whether a corresponding or associated RLC entity is to perform blind retransmission (or to perform blind retransmission by configuring a blind retransmission-related timer or counter value) for each RLC/PDCP/MAC/LCH/LCG/Bearer. For example, at least one of an RLC SDU, an SDU segment, or an AMD PDU subject to blind retransmission may be transmitted (or retransmitted) with a higher priority than at least one of other RLC SDUs, SDU segments, or AMD PDUs. For example, an AM RLC entity may include a poll in an AMD PDU subject to blind retransmission, or may request a STATUS PDU by configuring the P field to 1.

In an embodiment of the disclosure, after the AM RLC entity delivers or transmits at least one of an RLC SDU, an SDU segment, or an AMD PDU to or through a lower layer (MAC), or after at least one of the RLC SDU, SDU segment, or AMD PDU arrives at (or is generated) in the RLC layer, the AM RLC entity may start a specific timer (e.g., blind retransmission timer). If no ACK/NACK feedback has been received via a STATUS PDU for at least one of the RLC SDU, SDU segment, or AMD PDU by the time the blind retransmission timer expires, the AM RLC entity may retransmit (considered for retransmission) at least one of the RLC SDU, SDU segment, or AMD PDU. For example, such retransmission may be regarded as blind retransmission. For example, the blind retransmission may be performed only when at least one of the RLC SDU, SDU segment, or AMD PDU is a delay-critical RLC SDU, SDU segment, or AMD PDU at the time the retransmission timer expires or at the time the retransmission timer is started. For example, the retransmission may be performed only when a PDCP SDU included in at least one of the RLC SDU, SDU segment, or AMD PDU does not belong to a low-importance PDU set. For example, the AM RLC entity may request a STATUS PDU by adding a poll to an AMD PDU subject to retransmission or by configuring a P field to 1.

For example, when performing blind retransmission for at least one of a specific RLC SDU, SDU segment, or AMD PDU, a specific blind retransmission counter (e.g., a counter different from RETX_COUNT) or RETX_COUNT corresponding thereto may be incremented by 1. For example, when performing blind retransmission for at least one of the specific RLC SDU, SDU segment, or AMD PDU, the corresponding RETX_COUNT may not be incremented. For example, when blind retransmission is performed for the first time for at least one of the specific RLC SDU, SDU segment, or AMD PDU, the corresponding blind retransmission counter may be initialized to 0. For example, the base station may configure, via an RRC message, a maximum number of blind retransmissions for at least one of the specific RLC SDU, SDU segment, or AMD PDU. For example, blind retransmission may be performed only when a value of the blind retransmission counter is less than or equal to the maximum number of blind retransmissions.

In an embodiment of the disclosure, at least one of a delay-critical RLC SDU or SDU segment may refer to a case in which a remaining time of at least one of a PDCP discardTimer, a discardTimerForLowImportance, or a specific timer running in an RLC layer for at least one of the RLC SDU or SDU segment is less than or equal to a predetermined threshold. For example, a delay-critical AMD PDU may refer to an AMD PDU including at least one of the delay-critical RLC SDU or SDU segment. The threshold may be configured by the base station via an RRC message (e.g., RRCReconfiguration message) for application in an associated RLC/PDCP entity for each RLC/PDCP/MAC/Bearer/LCH/LCG. For example, the threshold or configuration field may be different from a remainingTimeThreshold used in a delay status report (DSR).

In an embodiment of the disclosure, with respect to an operation of an AM RLC entity, a transmitting AM RLC entity may refer to at least one of a UE RLC entity or a base station RLC entity.

In an embodiment of the disclosure, with respect to an operation of an AM RLC entity, a receiving AM RLC entity may refer to at least one of a UE RLC entity or a base station RLC entity.

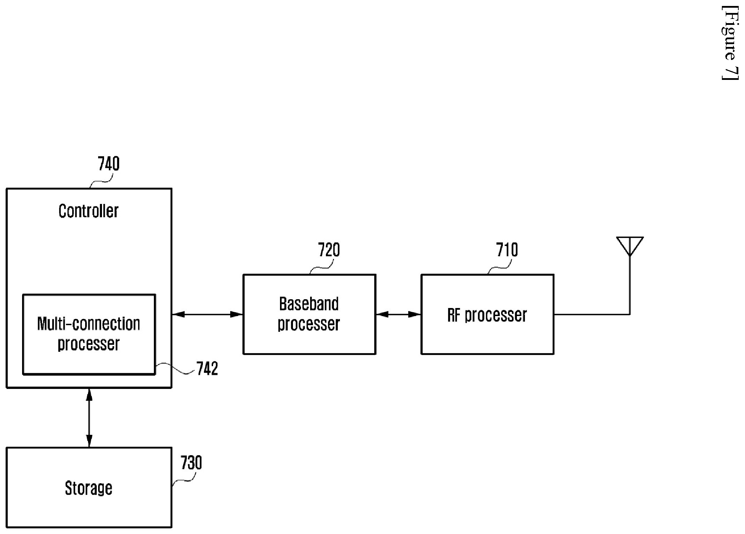

FIG. 7 is a block diagram illustrating an internal structure of a UE according to an embodiment of the disclosure.

With reference to FIG. 7, the UE may include a radio frequency (RF) processer 710, a baseband processer 720, a storage 730, a controller 740, and the like.

The RF processor 710 performs functions for transmitting and receiving signals through a wireless channel, such as signal band conversion and amplification. That is, the RF processer 710 up-converts a baseband signal provided from the baseband processer 720 into an RF band signal and transmits the RF band signal through an antenna, and down-converts an RF band signal received through the antenna into a baseband signal. For example, the RF processer 710 may include a transmission filter, a reception filter, an amplifier, a mixer, an oscillator, a digital to analog convertor (DAC), and an analog to digital convertor (ADC). In FIG. 7, only one antenna is illustrated; however, the UE may include a plurality of antennas. Further, the RF processer 710 may include a plurality of RF chains. Furthermore, the RF processer 710 may perform beamforming. For beamforming, the RF processer 710 may adjust a phase and an amplitude of each signal transmitted and received through the plurality of antennas or antenna elements. Further, the RF processer may perform multiple-input multiple-output (MIMO) operation and receive multiple layers when performing the MIMO operation.

The baseband processer 720 performs a conversion function between a baseband signal and a bit string according to the physical layer specifications of the system. For example, when transmitting data, the baseband processer 720 generates complex symbols by encoding and modulating a transmission bit string. Further, when receiving data, the baseband processer 720 restores a reception bit string by demodulating and decoding the baseband signal provided from the RF processer 710. For example, in the case of following an orthogonal frequency division multiplexing (OFDM) method, when transmitting data, the baseband processer 720 generates complex symbols by encoding and modulating a transmission bit string, maps the complex symbols to subcarriers, and then configures OFDM symbols through an inverse fast Fourier transform (IFFT) operation and cyclic prefix (CP) insertion. Further, when receiving data, the baseband processer 720 divides the baseband signal provided from the RF processer 710 into OFDM symbol units, restores signals mapped to subcarriers through fast Fourier transform (FFT), and then restores the received bit string through demodulation and decoding.

The baseband processer 720 and the RF processer 710 transmit and receive signals, as described above. Accordingly, the baseband processer 720 and the RF processer 710 may be referred to as a transmitter, a receiver, a transceiver, or a communication unit. Furthermore, at least one of the baseband processer 720 or the RF processer 710 may include a plurality of communication modules to support a plurality of different wireless access technologies. Further, at least one of the baseband processer 720 or the RF processer 710 may include different communication modules to process signals of different frequency bands. For example, the different wireless access technologies may include a wireless LAN (e.g., IEEE 802.11), a cellular network (e.g., LTE), and the like. Further, the different frequency bands may include a super high frequency (SHF) (e.g., 2.NRHz, NRhz) band, a millimeter wave (mm wave) (e.g., 60GHz) band.

The storage 730 stores data such as basic programs, application programs, and configuration information for the operation of the UE. The storage 730 provides the stored data according to a request from the controller 740.

The controller 740 controls the overall operations of the UE according to the embodiments of the disclosure described above. For example, the controller 740 may transmit and receive signals through the baseband processer 720 and the RF processer 710. Further, the controller 740 records and reads data in the storage 740. For this purpose, the controller 740 may include at least one processor. For example, the controller 740 may include a communication processor (CP) that performs control for communication and an application processor (AP) that controls upper layers such as application programs.

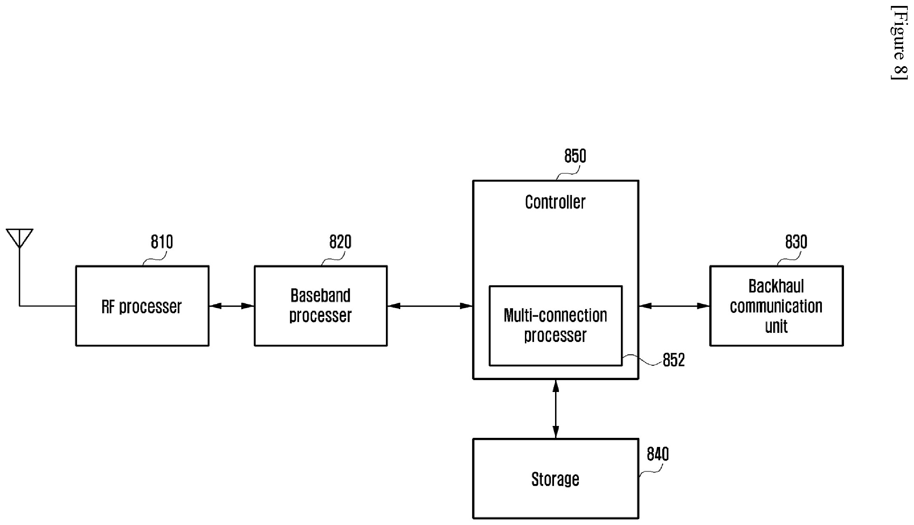

FIG. 8 is a block diagram illustrating a constitution of a base station according to an embodiment of the disclosure.

With reference to FIG. 8, the base station may include an RF processer 810, a baseband processer 820, a backhaul communication unit 830, a storage 840, a controller 850, and the like.

The RF processer 810 performs functions for transmitting and receiving signals through a wireless channel, such as signal band conversion and amplification. That is, the RF processer 810 up-converts a baseband signal provided from the baseband processer 820 into an RF band signal and transmits the RF band signal through an antenna, and down-converts an RF band signal received through the antenna into a baseband signal. For example, the RF processer 810 may include a transmission filter, a reception filter, an amplifier, a mixer, an oscillator, a DAC, and an ADC. In FIG. 8, only one antenna is illustrated; however, the base station may include a plurality of antennas. Further, the RF processer 810 may include a plurality of RF chains. Furthermore, the RF processer 810 may perform beamforming. For beamforming, the RF processer 810 may adjust a phase and an amplitude of each signal transmitted and received through the plurality of antennas or antenna elements. The RF processer may perform a downlink MIMO operation by transmitting one or more layers.

The baseband processer 820 performs a conversion function between a baseband signal and a bit string according to physical layer specifications of first wireless access technology. For example, when transmitting data, the baseband processer 820 generates complex symbols by encoding and modulating a transmission bit string. Further, when receiving data, the baseband processer 820 restores a reception bit string by demodulating and decoding the baseband signal provided from the RF processer 810. For example, in the case of following an OFDM method, when transmitting data, the baseband processer 820 generates complex symbols by encoding and modulating a transmission bit string, maps the complex symbols to subcarriers, and then configures OFDM symbols through IFFT operation and CP insertion. Further, when receiving data, the baseband processer 820 divides the baseband signal provided from the RF processer 810 into OFDM symbol units, restores the signals mapped to subcarriers through FFT operation, and then restores the received bit string through demodulation and decoding. The baseband processer 820 and the RF processer 810 transmit and receive signals, as described above. Accordingly, the baseband processer 820 and the RF processer 810 may be referred to as a transmitter, a receiver, a transceiver, a communication unit, or a RF unit.

The backhaul communication unit 830 provides an interface for communicating with other nodes within the network. That is, the backhaul communication unit 830 converts a bit string transmitted from the base station to another node, such as another base station (e.g., an auxiliary base station, a main base station), and a core network into a physical signal, and converts a physical signal received from the other node into a bit string.

The storage 840 stores data such as basic programs, application programs, and configuration information for the operation of the base station. In particular, the storage 840 may store information on bearers allocated to connected UEs, measurement results reported from connected UEs, and the like. Further, the storage 840 may store information that serves as a determination criterion for whether to provide or terminate multiple connections to a UE. The storage 840 provides stored data at the request of the controller 850.

The controller 850 controls the overall operations of the base station according to the embodiments of the disclosure described above. For example, the controller 850 may transmit and receive signals through the baseband processer 820 and the RF processer 810 or through the backhaul communication unit 830. Further, the controller 850 records and reads data in the storage 840. For this purpose, the controller 850 may include at least one processor.

It should be noted that constitution diagrams illustrated in FIGS. 1 to 8, diagrams of a control/data signal transmission method, operation procedure diagrams, and constitution diagrams are not intended to limit the scope of the disclosure. That is, all components, entities, or steps of operation described in FIGS. 1 to 8 should not be interpreted as essential components for implementation of the disclosure, and the disclosure may be implemented within the scope that does not impair the essence of the disclosure even by including only some components.

The operations of the network entity or the UE described above may be realized by providing a memory device storing the corresponding program code within any component of the network entity or the UE device. That is, the controller of the network entity or the UE device may execute the operations described above by reading and executing the program code stored in the memory device using a processor or central processing unit (CPU).

Various components and modules of the network entity, base station, or UE device described in this specification may be operated using a hardware circuit such as a combination of a complementary metal oxide semiconductor-based logic circuit, firmware, software, and/or hardware and firmware and/or software inserted into a machine readable medium. For example, various electrical structures and methods may be implemented using electrical circuits such as transistors, logic gates, and application specific integrated circuits.

In the detailed description of the disclosure, although specific embodiments have been described, various modifications are possible without departing from the scope of the disclosure. Therefore, the scope of the disclosure should not be limited to the described embodiments, but should be defined by the following claims and their equivalents.

## Claims

1. A method performed by a terminal in a communication system, the method comprising:
transmitting, to a base station, a message including information on capabilities of the terminal, wherein the information includes information on whether the terminal supports radio link control (RLC) polling related to delay-critical;
receiving, from the base station, if the terminal supports RLC polling related to delay-critical, a radio resource control (RRC) message including configuration information for the RLC polling related to delay-critical;
determining a condition for triggering the RLC polling related to delay-critical based on the RRC message; and
transmitting, to the base station, when the condition for triggering the RLC polling related to delay-critical is satisfied, a request message for feedback for retransmission of a protocol data unit (PDU).

2. The method of claim 1, further comprising:
receiving, from the base station, a report message including the feedback for retransmission of the PDU in a response to the request message; and
performing, when the feedback includes a negative acknowledgment (NACK), retransmission for a PDU related to the NACK.

3. The method of claim 1, further comprising identifying whether at least one of protocol data units (PDUs) is a delay-critical PDU based on the RRC message.

4. The method of claim 2, wherein the RRC message further comprises configuration information for RLC polling, and
the configuration information for RLC polling comprises at least one of information for calculating the number of protocol data units (PUDs) transmitted after transmitting the request message for requesting the feedback, information for calculating bytes of the PDUs transmitted after transmitting the request message for requesting the feedback, a timer for retransmitting a request message for requesting the feedback, PDU threshold information for triggering the RLC polling in relation to the number of PDUs, or byte threshold information for triggering the RLC polling in relation to bytes of the PDU.

5. The method of claim 2, wherein the configuration information for RLC polling related to delay-critical comprises at least one of information for calculating the number of delay-critical protocol data units (PUDs) transmitted after transmitting the request message for requesting the feedback, information for calculating bytes of the delay-critical PDUs transmitted after transmitting the request message for requesting the feedback, a timer for retransmitting the request message for requesting the feedback in relation to the delay-critical PDUs, PDU threshold information for triggering RLC polling related to delay-critical in relation to the number of delay-critical PDUs, and byte threshold information for triggering RLC polling related to delay-critical in relation to bytes of the delay-critical PDUs.

6. The method of claim 5, wherein the condition for triggering RLC polling related to delay-critical is determined based on at least one of configuration information for RLC polling related to delay-critical.

7. The method of claim 5, further comprising resetting, when the report message includes information on feedback for retransmission for the delay-critical PDU, the timer for retransmitting a request message for requesting the feedback in relation to the delay-critical PDU.

8. A terminal of a communication system, the terminal comprising:
a transceiver configured to transmit and receive signals; and
a controller coupled to the transceiver,
wherein the controller is configured to:
transmit, to a base station, a message including information on capabilities of the terminal, wherein the information includes information on whether the terminal supports radio link control (RLC) polling related to delay-critical,
receive, from the base station, a radio resource control (RRC) message including configuration information for the RLC polling related to delay-critical, if the terminal supports RLC polling related to delay-critical,
determine a condition for triggering the RLC polling related to delay-critical based on the RRC message, and
transmit, to the base station, a request message for feedback for retransmission of a protocol data unit (PDU), if the condition for triggering the RLC polling related to delay-critical is satisfied.

9. The terminal of claim 8, wherein the controller is configured to:
receive, from the base station, a report message including the feedback for retransmission of the PDU in response to the request message, and
perform, if the feedback includes a negative acknowledgment (NACK), retransmission for a PDU related to the NACK.

10. The terminal of claim 8, wherein the controller is configured to identify whether at least one of protocol data units (PDUs) is a delay-critical PDU based on the RRC message.

11. The terminal of claim 10, wherein the RRC message further comprises configuration information for RLC polling, and
the configuration information for RLC polling comprises at least one of information for calculating the number of protocol data units (PUDs) transmitted after transmitting the request message for requesting the feedback, information for calculating bytes of the PDUs transmitted after transmitting the request message for requesting the feedback, a timer for retransmitting a request message for requesting the feedback, PDU threshold information for triggering the RLC polling in relation to the number of PDUs, and byte threshold information for triggering RLC polling in relation to bytes of the PDU.

12. The terminal of claim 10, wherein the configuration information for RLC polling related to delay-critical comprises at least one of information for calculating the number of delay-critical protocol data units (PUDs) transmitted after transmitting the request message for requesting the feedback, information for calculating bytes of the delay-critical PDUs transmitted after transmitting the request message for requesting the feedback, a timer for retransmitting the request message for requesting the feedback in relation to the delay-critical PDUs, PDU threshold information for triggering RLC polling related to delay-critical in relation to the number of delay-critical PDUs, and byte threshold information for triggering RLC polling related to delay-critical in relation to bytes of the delay-critical PDUs.

13. The terminal of claim 12, wherein the condition for triggering RLC polling related to delay-critical is determined based on at least one of configuration information for RLC polling related to delay-critical.

14. The terminal of claim 12, wherein the controller is configured to reset a timer for retransmitting a request message for requesting the feedback in relation to the delay-critical PDU, when the report message includes information on feedback for retransmission for the delay-critical PDU.
